Europäisches Patentamt

European Patent Office

Office européen des brevets

(19)

(11) Veröffentlichungsnummer : **0 153 968**
**B1**

(12) **EUROPÄISCHE PATENTSCHRIFT**

(45) Veröffentlichungstag der Patentschrift :
23.12.87

(21) Anmeldenummer : 84102295.7

(22) Anmeldetag : 03.03.84

(51) Int. Cl.⁴ : **F 04 C 15/04**

(54) **Lenkhilfpumpe.**

(43) Veröffentlichungstag der Anmeldung :
**11.09.85 Patentblatt 85/37**

(45) Bekanntmachung des Hinweises auf die Patenterteilung : **23.12.87 Patentblatt 87/52**

(84) Benannte Vertragsstaaten :
**DE FR GB IT SE**

(56) Entgegenhaltungen :
**EP-A- 0 094 457**
**US-A- 2 752 853**
**US-A- 2 768 585**
**US-A- 3 918 848**

(73) Patentinhaber : **Vickers Systems GmbH**
**Frölingstrasse 41**
**D-6380 Bad Homburg (DE)**

(72) Erfinder : **Krüger, Heinz**
**An den Tannen 9**
**D-6391 Wilhelmsdorf (DE)**
Erfinder : **Teubler, Heinz**
**Ringstrasse 3**
**D-6382 Friedrichsdorf (DE)**
Erfinder : **Schulz, René, Dr.**
**Im Spiess 8**
**D-6392 Neu-Anspach (DE)**
Erfinder : **Stämmler, Erwin**
**Steinstrasse 17**
**D-6242 Kronberg (DE)**

(74) Vertreter : **Blumbach Weser Bergen Kramer Zwirner**
**Hoffmann Patentanwälte**
**Sonnenbergerstrasse 43**
**D-6200 Wiesbaden 1 (DE)**

## Beschreibung

Die Erfindung bezieht sich auf eine Lenkhilfpumpe nach dem Oberbegriff des Anspruches 1. Eine solche Pumpe ist aus der Druckschrift US-A-2 752 853 bekannt.

Lenkhilfpumpen sind gewöhnlich in der Bauart als Flügelzellenpumpen ausgeführt, in deren Gehäuse eine Druckplatte, ein Nockenring und ein Rotor zur Umgrenzung von wenigstens einem Arbeitsbereich angeordnet sind, der durch Flügel in Zellenräume aufgeteilt ist, die beim Antrieb des Rotors durch eine Welle zwischen Einlaßöffnungen und Auslaßöffnungen wandern. Die Einlaßöff-nungen sind mit einem Hydraulikflüssigkeitszu-fuhrsystem und die Auslaßöffnungen mit einem Hydraulikflüssigkeitsabfuhrsystem verbunden, die untereinander über ein Stromregelventil in Verbindung stehen. Das Stromregelventil enthält einen Schieberkolben, eine Ventilfeder und eine Meßblende oder Drossel, an der ein Druckabfall abgegriffen und den beiden Seiten des Schieberkolbens zugeführt wird. In dem Stromregelventil ist gewöhnlich noch ein Druckbegrenzungsventil enthalten, welches beim Überschreiten eines Grenzdruckes anspricht und einen Teil des geregelten Förderstromes in einen internen Einlaßkanal der Pumpe entlädt.

Die Lenkhilfpumpe ist über eine äußere Auslaß-leitung mit einer Servolenkeinrichtung verbun-den, die normalerweise den geregelten Förderstrom zu dem Tank weiterleitet. Es kann aber bei extremem Lenkeinschlag vorkommen, daß die Servolenkeinrichtung den geregelten Förderstrom fast absperrt, so daß der Druck stark zunimmt und das Druckbegrenzungsventil anspricht. An dem Druckbegrenzungsventil wird eine hohe Leistung umgesetzt, so daß sich die Hydraulikflüssigkeit stark erhitzt, zumal die Hy-draulikflüssigkeit innerhalb der Pumpe umge-wälzt wird. Dieser Zustand führt nach einer gewis-sen Zeit zur Zerstörung der Pumpe.

Der Erfindung liegt die Aufgabe zugrunde, eine Lenkhilfpumpe zu schaffen, die trotz der Abrege-lung innerhalb des Pumpengehäuses funktionsfä-hig bleibt.

Dieses Problem wird dadurch gelöst, daß ein Temperaturfühlerventil im Entladestromweg des Druckbegrenzungsventils zur Öffnung eines Auslaßweges zum Einlaßkanal angeordnet ist, wenn die Temperatur im Entladestromweg über einen Grenzwert steigt.

Das Temperaturfühlerventil wirkt dabei parallel zu dem Vorsteuerdruckventil und senkt den Regeldruck der Pumpe stark ab. Damit wird eine weitere Aufheizung der Pumpe vermieden. Wenn das Lenkungsventil wieder öffnet, wird wieder Öl ausgetauscht, die Temperatur in der Pumpe sinkt wieder, das Temperaturfühlerventil schließt, und die Pumpe kann wieder den notwendigen Druck aufbauen.

Ausführungsbeispiele der Erfindung werden anhand der Zeichnung beschrieben. Dabei zeigt :
Fig. 1 einen Längsschnitt durch eine Flügelzellenpumpe ;
Fig. 2 einen Querschnitt entlang der Linie II-II nach Fig. 1 ;
Fig. 3 ein schematisches hydraulisches Schaltbild ;
Fig. 4 eine alternative Einzelheit zu Fig. 3 ;
Fig. 5 eine weitere alternative Einzelheit.

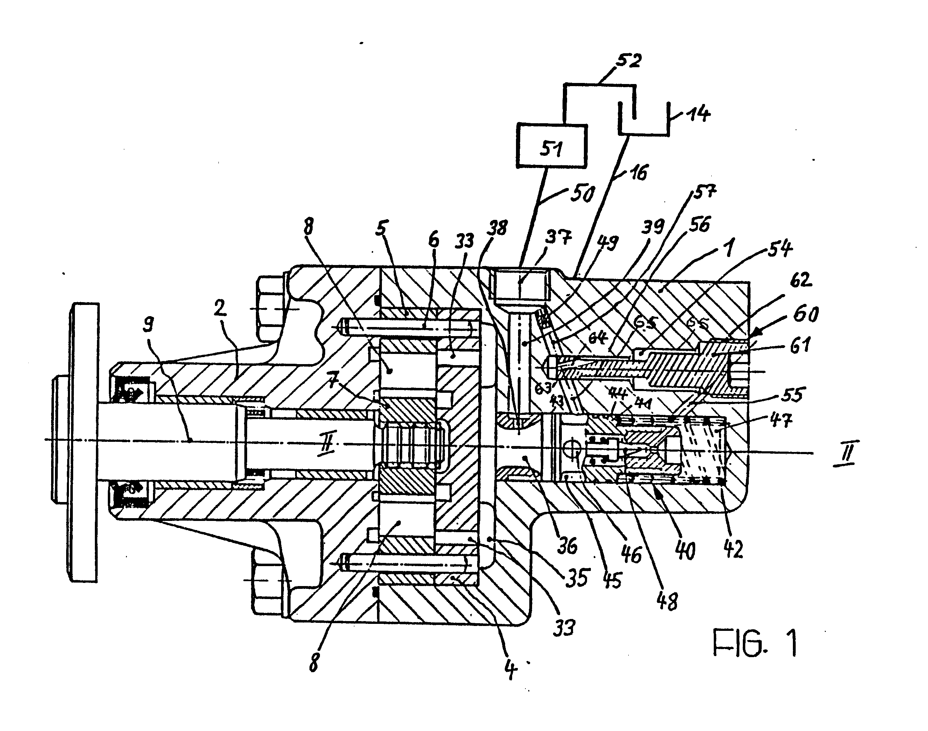

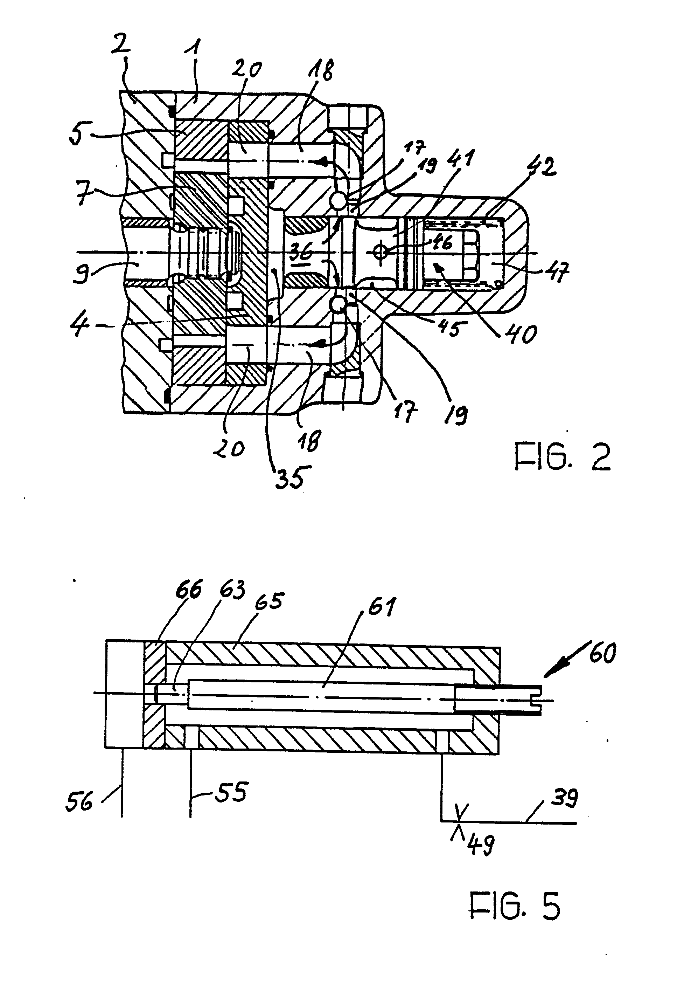

Die in den Fig. 1 und 2 dargestellte Lenkhilfpumpe ist als Flügelzellenpumpe ausgebildet und weist ein Gehäusehauptteil 1 und einem Gehäusedeckel 2 auf, die einen Innenraum druckmitteldicht einschließen. Im Innenraum sitzen — gehäusefest angeordnet — eine Druckplatte 4 und ein Nockenring 5, die durch Stifte 6 drehgesichert sind. Innerhalb des Nockenringes 5 und zwischen dem Gehäusedeckel 2 und der Druckplatte 4 ist ein Rotor 7 angeordnet, der eine Reihe von radialen Führungsschlitzen besitzt. Innerhalb dieser Führungsschlitze sind Flügel 8 radial verschieblich gelagert. Der Rotor 7 ist über eine Welle 9 antreibbar, die in einer Lagerbohrung des Gehäusedeckels 2 gelagert ist. Der Rotor 7 ist zylindrisch geformt, während der Nockenring 5 einen angenähert ovalen Innenumriß aufweist, dessen kleine Achse etwa dem Durchmesser des Rotors entspricht, während die große Achse die Auszugslänge der Flügel 8 bestimmt. Auf diese Weise liegen zwischen dem Nockenring 5 und dem Rotor 7 zwei sichelförmige Arbeitsbereiche, die von den Flügeln 8 in eine Anzahl von Innenräumen unterteilt werden. Bei der Saugseite des Systems vergrößern sich die Zellenräume und bei der Druckseite verkleinern sie sich.

Von einem Tank 14 führt eine Verteilleitung 16 in zwei Zufuhrkanäle 17, die als senkrechte Bohrungen (Fig. 2) ausgebildet sind und jeweils tangential in einen waagerechten, knieförmigen Zufuhrkanalabschnitt 18 einmünden. Die Zufuhrkanalabschnitte 18 weisen jeweils einen radialen Schenkel auf, der in einen Entladekanal 19 einmündet. Die axialen Schenkel der Zufuhrkanalabschnitte 18 stoßen auf Durchgangsöffnungen 20 der Druckplatte 4, von wo aus eine Aufteilung des Hydraulikstromes in die sichelförmigen Arbeitsbereiche der Pumpe erfolgt.

Die Abfuhr der Hydraulikflüssigkeit erfolgt über Kanäle 33 (Fig. 1) durch die Druckplatte 4 hindurch auf deren Rückseite in einen Druckraum 35 und von dort in eine Venturidüse 36. In der Venturidüse 36 teilt sich der Pumpenförderstrom auf in einen geregelten Förderstrom zum äußeren Pumpenauslaß 37 und einen abgeregelten Förderstrom durch ein Stromregelventil 40 in die Entladekanäle 19. Der geregelte Förderstrom gelangt durch eine Meßblende oder Drossel 38 in einen Abfuhrkanal 39, der über eine Drossel 49 mit dem Steuerraum 47 des Ventils 40 in Verbindung steht. Das Ventil 40 weist einen Schieberkolben 41 auf, der durch die Kraft einer Feder 42 in Richtung auf die Venturidüse 36 gedrängt und gegebenenfalls dort zur Anlage gebracht wird. Der Schieberkolben 41 weist zwei bundförmige Abdichtbereiche 43 und 44 auf, zwischen denen sich eine Ringnut 45 erstreckt, die mit den Entladekanälen 19 in Verbindung steht. Von der Ringnut 45 führt ein teilweise radial und teilweise axial sich erstreckender Kanal 46 durch den Schieberkolben 41 in den Steuerraum 47, und der Kanal 46 wird von einem federbelasteten Kegelventil 48 beherrscht, welches beim Überschreiten eines Grenzdruckes im Steuerraum 47 abhebt, so daß sich der Hochdruck über den Kanal 46, den Ringraum 45 in den Entladekanal 19 entspannen kann. Das Kegelventil 48 stellt somit ein Druckbegrenzungsventil dar, welches im übrigen auch die Lage des Schieberkolbens 41 steuert, da wegen der Drossel 49 der Druck im Steuerraum 47 abfällt und der Hochdruck in der Venturidüse 36 gegenüber der Federkraft 42 überwiegt, wie in Fig. 2 dargestellt. Die unter Druck stehende Hydraulikflüssigkeit spritzt dabei strahlförmig in die Kanäle 19, 18, wie durch Pfeile dargestellt, und erzeugt einen Unterdruck in den Zufuhrkanälen 17, die mit dem Tank 14 in Verbindung stehen. Die Zufuhrkanäle 17 können deshalb als Injektor bezeichnet werden. Es wird aber nur dann Hydraulikflüssigkeit nachgesaugt, wenn Hydraulikflüssigkeit am äußeren Pumpenauslaß 37 über eine Auslaßleitung 50, eine Servolenkeinrichtung 51 und eine Tankleitung 52 Hydraulikflüssigkeit abströmt. Wenn die Servolenkeinrichtung 51 völlig oder nahzu zugesperrt ist, wird die Hydraulikflüssigkeit im wesentlichen im Inneren der Pumpe umgewälzt und erreicht erhebliche Temperaturgrade, die sogar zur Zerstörung der Pumpe führen können.

Es ist deshalb ein Temperaturfühlerventil 60 vorgesehen, das parallel zum Druckbegrenzungsventil 48 wirkt. Das Temperaturfühlerventil enthält einen Stab 61, der bei 62 im Pumpengehäuse 1 eingespannt ist und sich frei in einer Bohrung 54 erstreckt, die über eine weitere Bohrung 55 mit dem Steuerraum 47 verbunden ist. An seinem freien Ende trägt der Stab 61 ein Verschlußelement 63, welches eine Bohrung 56 sperrt, die in die Ringnut 45 einmündet und über den Entladekanal 19 mit dem Zufuhrkanalabschnitt 18 in Verbindung steht. Der Stab 61 besteht aus einem Material mit geringer Wärmedehnung, beispielsweise Nickeleisen, wenn das Material des Pumpengehäuses 1 eine höhere Wärmedehnung aufweist, z. B. aus Aluminium besteht während im Falle von Grauguß als Gehäusematerial der Stab 61 aus Aluminium gefertigt wird. Im Stab 61 ist ein Kanal 64 (Nut oder Bohrung) vorgesehen, der die Bohrung 54 mit einer Bohrung 57 verbindet, in welcher die Drossel 49 sitzt, so daß der Steuerraum 47 über den Weg 55 54 64, 57, 49 mit dem Pumpenauslaß 37 verbunden ist.

Wenn in der bereits besprochenen Weise das Druckbegrenzungsventil 48 wegen Überschreitung des Grenzwertes anspricht, bildet sich ein Entladestromweg 39, 37, 49 57, 64, 54 55 48, 46, 45, 19, und wegen des erheblichen Energieumsatzes nimmt die Temperatur der Hydraulikflüssigkeit stark zu. Der Stab 61 wird von der heißen Hydraulikflüssigkeit umspült. Infolge der geringen Wärmeausdehnung des Stabes 61 gegenüber dem Gehäuse 1 gibt das Verschlußelement 63 einen Spalt in die Bohrung 56 frei, so daß Hydraulikflüssigkeit aus dem Steuerraum 47 und aus der Bohrung 57 entweichen kann und über den Entladekanal 19 zur Saugseite der Pumpe gelangt. Als Folge davon wird der Druck im Steuerraum 47 vermindert, und der Schieberkolben 41 bewegt sich weiter in öffnender Richtung. Damit wird der Auslaßdruck der Pumpe stark abgesenkt. Dadurch wird der Energieumsatz verringert und die weitere Aufheizung der Pumpe verhindert.

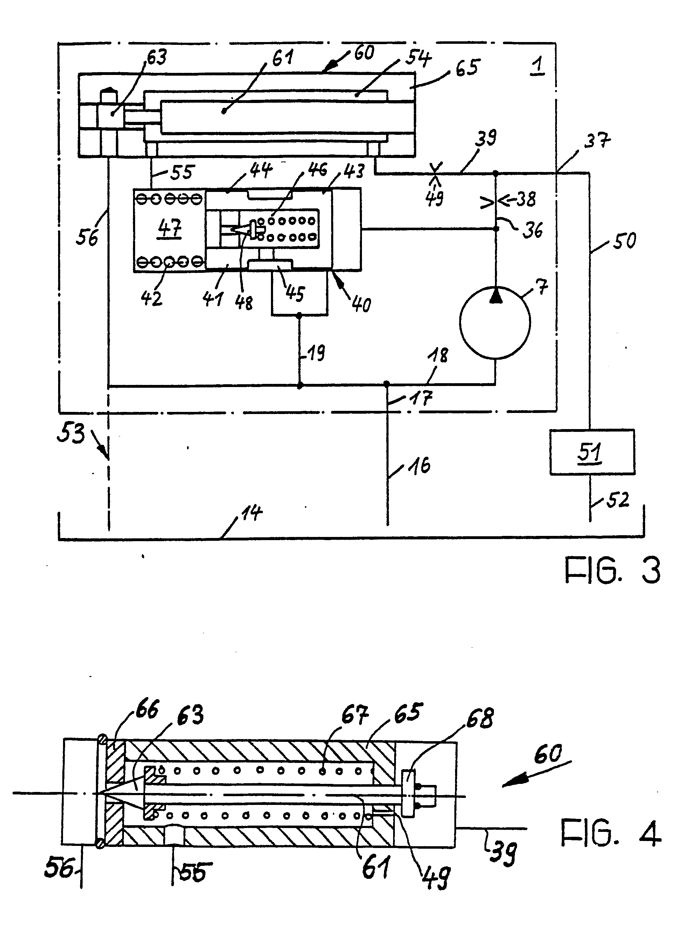

Fig. 3 zeigt eine Schemazeichnung einer Lenkhilfpumpe mit angeschlossener Servolenkeinrichtung, wobei mit Bezug auf die Ausführungsform nach Fig. 1 und 2 gleichartige Teile mit den gleichen Bezugszeichen belegt wurden. Es ist wiederum eine Wärmedehneinrichtung 60 vorgesehen, die einen Stab 61 und eine längliche Gehäusewandung umfaßt, die als Schieberhülse 65 ausgebildet ist und sich innerhalb des Pumpengehäuses 1 ausdehnen kann. Das Material des Stabes 61 und der Schieberhülse 65 zeichnet sich durch einen möglichst großen Unterschied im Wärmeausdehnungskoeffizienten aus.

Der über die Bohrung 56 geführte Auslaßweg zum Einlaßkanal 18, 19 kann auch über den Tank 14 geführt sein, was durch eine gestrichelt gezeichnete Auslaßleitung 53 angedeutet ist. In diesem Fall wird die heiße, über den Auslaßkanal 53 abströmende Flüssigkeitsmenge durch frische, normalerweise kühlere Flüssigkeit ersetzt, die aus dem Tank 14 über die Verteilleitung 16 nachgesaugt wird. Diese Ausführungsform ist funktionell besonders günstig, weil man die Leistungsbereitschaft der Pumpe an der Servolenkeinrichtung 51 aufrechterhalten kann, vor allem, wenn man die Drossel 49 im Kanal 55 anordnet und die unmittelbare Verbindung zwischen den Bohrungen 56/19 aufgibt : jedoch macht die gesonderte Auslaßleitung 53 häufig eine Abänderung des Tanks 14 erforderlich.

Fig. 4 zeigt eine weitere Ausführungsform des Temperaturfühlerventils 60. Die Schiebehülse 65 besteht aus Aluminium und weist eine Ventilsitzplatte 66 aus Stahl auf. Der Stab 61 besteht aus Nickeleisen und ist in der Hülse 65 verschieblich geführt, wobei eine Feder 67 den Stab 61 mit seinem Verschlußelement 63 gegen die Ventilsitzplatte 66 drängt. Nach Anwärmen des Temperaturfühlerventils 60 kommt ein Anschlag 68 des Stabs 61 zur Anlage an der Hülse 65, so daß deren weitere Ausdehnung zur allmählichen Öffnung des Temperaturfühlerventils führt. Dadurch kann ein Zweigstrom zur Saugleitung geleitet werden, wodurch wiederum der Pumpendruck abgesenkt wird.

Fig. 5 zeigt eine weitere Ausführungsform des Temperaturfühlerventils 60. Der Stab 61 aus Nickeleisen ist in die Hülse 65 aus Aluminium eingeschraubt, und das Verschlußelement 63 reicht ein wenig in die Öffnung der Ventilsitzplatte 66 aus Stahl. Wenn sich das Aluminium der Hülse 65 ausdehnt, kommt die Ventilöffnung ein wenig frei, und ein Teilstrom wird zur Saugleitung abgezweigt.

Die Hülse 65 kann Teil des Pumpengehäuses sein, was vor allem dann in Betracht kommt, wenn dieses aus Aluminium besteht.

## Patentansprüche

1. Lenkhilfpumpe mit einem Gehäuse (1), welches über Leitungen oder Kanäle (16, 17) mit einem Tank (14) verbunden ist, mit einer Auslaßleitung (50), die mit einer Servolenkeinrichtung (51) in Verbindung steht welche wiederum mit dem Tank (14) verbunden ist, mit einem Stromregelventil (40), welches den Förderstrom der Pumpe innerhalb des Pumpengehäuses (1) in einen geregelten Förderstrom und einen abgeregelten Förderstrom aufteilt, wobei der geregelte Förderstrom über die äußere Auslaßleitung (50) der Servolenkeinrichtung (51) und der abgeregelte Förderstrom einem internen Einlaßkanal (18, 19) der Pumpe zugeführt werden, mit einem Druckbegrenzungsventil (48), welches mit dem Druck des geregelten Förderstroms beaufschlagt ist und bei Überschreiten eines Grenzdrucks in den internen Einlaßkanal (18, 19) der Pumpe entlädt, wobei ein interner Entladestromweg (38, 39, 49, 64, 54, 55, 47, 48, 45) durchflossen wird, dadurch gekennzeichnet, daß ein Temperaturfühlerventil (60) in dem Entladestromweg (38, 39, 49, 64, 54, 55, 47, 48, 45) des Druckbegrenzungsventils (48) zur Öffnung eines Auslaßweges (56) zum Einlaßkanal (18, 19), wenn die Temperatur im Entladestromweg über einen Grenzwert steigt, angeordnet ist.

2. Lenkhilfpumpe nach Anspruch 1 dadurch gekennzeichnet, daß das Temperaturfühlerventil (60) eine Wärmedehneinrichtung (61, 65) und ein SchaltVerschlußelement (63) umfaßt das den Auslaßweg (56) zum Einlaßkanal (18, 19) bei Normalbetrieb abdeckt.

3. Lenkhilfpumpe nach Anspruch 2, dadurch gekennzeichnet, daß die Wärmedehneinrichtung aus einer länglichen Gehäusewandung (65) und einem sich darin erstreckenden Stab (61) besteht.

4. Lenkhilfpumpe nach Anspruch 3, dadurch gekennzeichnet, daß die Gehäusewandung (65) und der Stab (61) aus Materialien mit stark unterschiedlichen Wärmeausdehnungskoeffizienten bestehen.

5. Lenkhilfpumpe nach Anspruch 4, dadurch gekennzeichnet daß die Gehäusewandung der Wärmedehneinrichtung aus einer Schiebehülse (65) mit hohem Wärmeausdehnungskoeffizienten besteht.

6. Lenkhilfpumpe nach Anspruch 4 oder 5, dadurch gekennzeichnet, daß der Stab (61) aus Nickeleisen besteht.

7. Lenkhilfpumpe nach einem der Ansprüche 3-6, dadurch gekennzeichnet, daß der Stab (61) in der Gehäusewandung oder Schiebehülse (65) eingespannt ist.

8. Lenkhilfpumpe nach Anspruch 5 oder 6, dadurch gekennzeichnet, daß der Stab (61) mit einem Anschlag (68) in der Gehäusewandung oder der Schiebehülse (65) geführt ist.

9. Lenkhilfpumpe nach einem der Ansprüche 1-8, dadurch gekennzeichnet, daß der Auslaßweg (56) zum Einlaßkanal (18, 19) über den Tank (14) geführt ist (Auslaßleitung 53).

10. Lenkhilfpumpe nach einem der Ansprüche 1-9, dadurch gekennzeichnet, daß sich das Temperaturfühlerventil (60) parallel zur Längserstreckung des Druckbegrenzungsventils (48) erstreckt und einen Teil (54) des Verbindungskanals zwischen Druckkammer (35) und Steuerkammer (47) des Druckbegrenzungsventils (48) bildet.

## Claims

1. Power steering pump comprising a housing (1) connected to a tank (14), via lines or ducts (16, 17), the pump having an outlet line (50) which communicates with a power steering servo unit (51) that is connected back to the tank (14), the pump further comprising a flow-regulating valve (40) which, within the pump housing (1), divides the flow leaving the delivery side of the pump into a regulated delivery flow and an unregulated delivery flow, the former being supplied to the power steering servo unit (51) via the external outlet line (50), and the latter being supplied to an internal inlet duct (18, 19) that leads to the pump, and the pump further comprising a pressure-limiting valve (48), to which the regulated delivery flow is applied and which, in the event of a predetermined pressure being exceeded, discharges into the internal inlet duct (18, 19) that leads to the pump, flow taking place via an internal discharge flow path (38, 39, 49, 64, 54, 55, 47, 48, 45), characterised in that a valve (60) which incorporates a temperature sensor is installed in the discharge flow path (38, 39, 49, 64, 54, 55, 47, 48, 45) associated with the pressure-limiting valve (48), the function of the temperature-sensitive (60) being to open an outlet path (56) to the inlet duct (18, 19) if the temperature in the discharge flow path exceeds a predetermined value.

2. Power steering pump according to claim 1, characterised in that the temperature-sensitive valve (60) incorporates a thermal expansion device (61, 65) and a movable closure element (63) which blanks off the outlet path (56) to the inlet duct (18, 19) during normal operation.

3. Power steering pump according to claim 2, characterised in that the thermal expansion device is formed by an elongate wall (65) of the housing, and by a rod (61) that extends within this housing wall (65).

4. Power steering pump according to claim 3, characterised in that the housing wall (65) and the rod (61) are composed of materials which have markedly different thermal expansion coefficients.

5. Power steering pump according to claim 4, characterised in that the housing wall of the thermal expansion device consists of a sliding sleeve (65) which has a high thermal expansion coefficient.

6. Power steering pump according to claim 4 or 5, characterised in that the rod (61) is composed of nickel iron.

7. Power steering pump according to any of claims 3 to 6, characterised in that the rod (61) is fixed within the housing wall or sliding sleeve (65).

8. Power steering pump according to claim 5 or 6, characterised in that the rod (61) is provided with a stop (68), and is guided in the housing wall or sliding sleeve (65).

9. Power steering pump according to any of claims 1 to 8, characterised in that the outlet path (56) is routed to the inlet duct (18, 19) via an outlet line (53) and the tank (14).

10. Power steering pump according to one of claims 1 to 9, characterised in that the temperature-sensitive valve (60) extends parallel to the longitudinal axis of the pressure-limiting valve (48) and forms a portion (54) of the connecting duct between the pressure chamber (35) and the control chamber (47) of the pressure-limiting valve (48).

## Revendications

1. Pompe de direction assistée, comportant un carter (1), qui est relié par l'intermédiaire de canalisations ou de canaux (16, 17) à un réservoir (14), une canalisation de sortie (5), qui est reliée à un dispositif de direction assistée (51), qui est relié à nouveau au réservoir (14), une soupape (40) de régulation de l'écoulement, qui subdivise l'écoulement de refoulement de la pompe, à l'intérieur du carter (1) de cette dernière, en un écoulement de refoulement réglé et en un écoulement de refoulement non réglé l'écoulement de refoulement réglé étant envoyé par l'intermédiaire de la canalisation extérieure de sortie (50) au dispositif de direction assistée (51) et l'écoulement de refoulement non réglé étant envoyé à un canal interne d'admission (18, 19) de la pompe, une soupape de limitation de pression (48), qui est chargée par la pression de l'écoulement de refoulement réglée et qui réalise une décharge dans le canal interne d'admission (18, 19) de la pompe lors d'un dépassement d'une pression limite, auquel cas il se produit une circulation dans une voie interne d'écoulement de décharge (38, 39, 49, 54, 55, 47, 48, 45), caractérisée par le fait que dans la voie d'écoulement de décharge (38, 39, 49, 64, 54, 55, 47, 48, 45) de la soupape de limitation de pression (48) se trouve disposée une soupape (60) formant capteur de température, qui sert à ouvrir une voie de sortie (56) débouchant dans le canal d'admission (18, 19), lorsque la température dans la voie d'écoulement de décharge dépasse une valeur limite.

2. Pompe de direction assistée selon la revendication 1, caractérisée en ce que la soupape (60) formant capteur de température contient un dispositif de dilatation thermique (61, 65) et un organe de fermeture commutable (63) qui ferme la voie de sortie (56) débouchant dans le canal d'admission (18, 19) dans le cas du fonctionnement normal.

3. Pompe de direction assistée suivant la revendication 2, caractérisée par le fait que le dispositif de dilatation thermique est constitué par une paroi allongée (65) formant boîtier et par une tige (61) s'étendant à l'intérieur de cette paroi.

4. Pompe de direction assistée selon la revendication 3, caractérisée en ce que la paroi formant boîtier (65) et la tige (61) sont constituées par des matériaux possédant des coefficients de dilatation thermique très différents.

5. Pompe de direction assistée selon la revendication 4, caractérisée en ce que la paroi formant boîtier du dispositif de dilatation thermique est constituée par un manchon à tiroir (65) possédant un coefficient de dilatation thermique élevé.

6. Pompe de direction assistée selon la revendication 4 ou 5, caractérisée en ce que la tige (61) est constituée par du ferronickel.

7. Pompe de direction assistée selon l'une des revendications 3-6, caractérisée en ce que la tige (61) est fixée par serrage dans la paroi formant carter ou le manchon à tiroir (65).

8. Pompe de direction assistée selon la revendication 5 ou 6, caractérisée en ce que la tige (61) est guidée par une butée (68) dans la paroi formant boîtier ou le manchon à tiroir (65).

9. Pompe de direction assistée selon l'une des revendications 1-8, caractérisée en ce que la voie de sortie (56) est raccordée au canal d'admission (15, 19) par l'intermédiaire du réservoir (14) (canalisation de sortie 53).

10. Pompe de direction assistée selon l'une des revendications 1-9, caractérisée en ce que la soupape (60) formant capteur de température s'étend parallèlement à l'étendue longitudinale de la soupape de limitation de pression (48) et forme une partie (54) du canal de liaison s'étendant entre la chambre de pression (35) et la chambre de commande (47) de la soupape de limitation de pression (48).

FIG. 1

0 153 968

FIG. 2

FIG. 5

FIG. 3

FIG. 4

3